# FASCICULE DE BREVET EUROPEEN

(11) **EP 0 655 581 B1**
(45) Date de publication et mention de la délivrance du brevet: **28.02.2001**
(21) Numéro de dépôt: 94402725.9
(22) Date de dépôt: 29.11.1994
(51) Int. Cl.: F23D 14/22, F23D 14/32

(54) **Brûleur oxycombustible dissymétrique**
Asymmetrischer Sauerstoffbrennstoffbrenner
Asymmetrical oxyfuel burner

(30) Priorité: 30.11.1993 FR 9314305
(43) Date de publication de la demande: 31.05.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Dick, Sami, F-78150 Le Chesnay (FR); Recourt, Patrick, F-91460 Marcoussis (FR); Laurenceau, Serg, F-78000 Versailles (FR)
(74) Mandataire: Vesin, Jacques

(56) Documents cités:
- EP-A- 0 481 835
- FR-A- 2 212 912
- SOVIET PATENTS ABSTRACTS Section PQ, Week 8615, 20 Avril 1986 Derwent Publications Ltd., London, GB; Class Q73, AN 86-098984 & SU-A-1 179 023 (AS UKR GAS INST) 15 Septembre 1985

## Description

La présente invention concerne un procédé de combustion d'un combustible et d'un oxydant, utilisable dans un four, tel qu'un four de verrerie, et plus particulièrement les brûleurs à basse impulsion, c'est à dire ceux fonctionnant avec une vitesse de sortie de gaz relativement faible.

Le resserrement des normes d'émission des polluants, notamment dans l'industrie verrière, a encouragé les industriels à utiliser des brûleurs adaptés pour la combustion à l'oxygène (avec des mélanges oxydants à haute teneur en O2, comprise entre 85 et 100%).

Il est connu de SU-A-1179023 un brûleur comportant un conduit véhiculant de l'air dans lequel sont disposés deux injecteurs de gaz combustible convergents, l'un disposé selon l'axe du brûleur et l'autre disposé selon un angle par rapport à l'axe.

La Demanderesse s'est posé le problème d'améliorer les performances de tels brûleurs et notamment de diminuer l'émission d'oxydes d'azote lors de l'utilisation d'oxygène à moyenne pureté, tel qu'on peut l'obtenir par exemple dans une séparation de l'air par adsorption du type dit VSA et/ou d'un gaz naturel contenant de l'azote, type Grôningue par exemple, en Europe.

La Demanderesse a trouvé que cette diminution peut être obtenue d'une manière très sensible par une répartition dissymétrique du débit total de gaz combustible dans le flux d'oxygène véhiculé par le brûleur.

Plus précisément, si l'on considère que, dans le fonctionnement normal du brûleur, le rapport des débits totaux d'oxygène et de gaz combustible est stoéchiométrique ou sensiblement tel, une particularité principale d'un brûleur selon l'invention réside dans une répartition des débits de gaz dans une même section transversale du brûleur, en amont de la flamme, telle que dans au moins une partie de cette section le rapport du débit d'oxygène au débit de gaz soit nettement au-dessous de la valeur stoechiométrique.

On a constaté, de façon surprenante, que cette dissymétrie dans la répartition des débits, en amont de la naissance de la flamme, fournit et conserve une zone dans laquelle la teneur en oxydes d'azote est réduite par rapport au cas où la répartition des débits serait uniforme ou sensiblement telle dans toute la section.

On peut noter aussi que la configuration dissymétrique produisant une zone à sous-stoéchiométrie dans la flamme, convient aussi lorsque l'on cherche à obtenir localement une atmosphère réductrice, par exemple au - dessus d'un bain de verre.

D'autres caractéristiques et les avantages de la présente invention ressortiront de la description suivantes de modes de réalisation donnés, faite en relation avec les dessins annexés, sur lesquels :
- la figure 1 représente schématiquement une vue de face d'un brûleur connu, à répartition symétrique des débits de gaz combustible;
- la figure 2 est une vue semblable d'un premier brûleur;
- la figure 3 est un diagramme comparatif représentant les variations des émissions en oxydes d'azote avec des brûleurs selon les figures 1 et 2; et
- les figures 4 et 5 représentent deux autres brûleurs.

Un brûleur peut ainsi comporter trois parties principales, soit un bloc ouvreau en matériau réfractaire, un corps de brûleur métallique attaché de manière démontable sur l'ouvreau sur le côté duquel arrive la canalisation d'oxydant et au moins une canne d'injection de combustible, fixée de manière démontable et étanche sur le corps, le combustible arrivant par conséquent par l'arrière du brûleur.

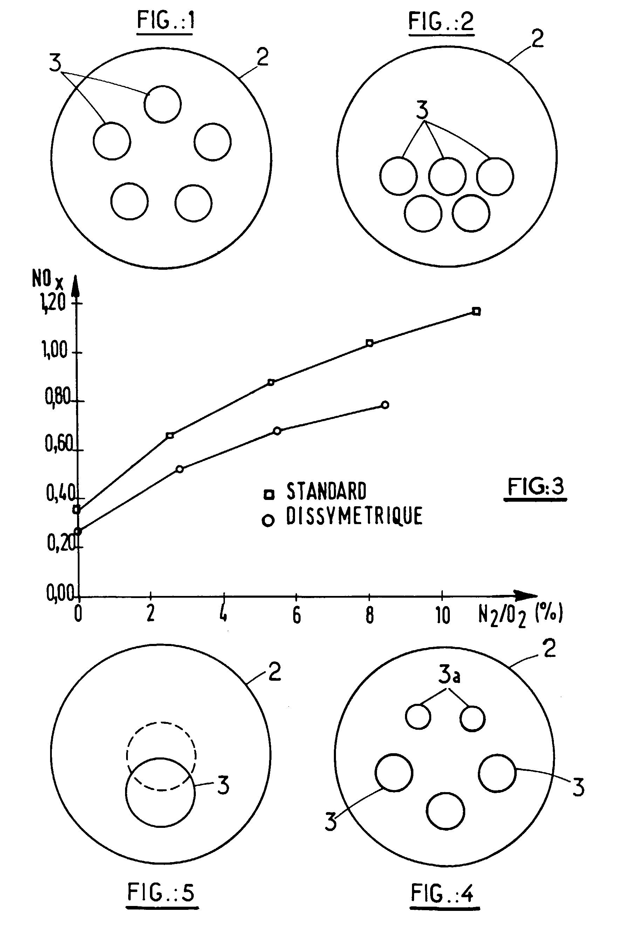

La figure 1 illustre le cas où la canne d'injection comporte un ou plusieurs tubes 3 angulairement répartis dans le flux d'oxygène ou plus précisément d'oxydant à teneur en O2 supérieure à 90%, qui circule dans l'enveloppe tubulaire 2 constituant un prolongement du corps de brûleur.

Sur la figure 2 on voit que les tubes 3 véhiculant le gaz combustible (réducteur), au lieu d'être régulièrement répartis dans l'enveloppe 2 où circule l'oxydant, sont concentrés dans une partie de la section, en l'occurrence sûr une moitié inférieure de la section de l'enveloppe tubulaire 2. On comprend par conséquent que, dans un tel cas, le rapport oxydant/réducteur sera nettement au-dessous du rapport stoechiométrique, à la sortie des tubes 3, en amont de la naissance de la flamme.

La figure 3 illustre les diagrammes des quantités d'oxydes d'azote normalisées (en kg/MW), en ordonnées, par rapport à la teneur en azote, en pourcentage, de l'oxygène utilisé, en abscisses, pour un brûleur de 1 MW brûlant du gaz naturel ayant une teneur en azote d'environ 2,5 %, les débits de gaz naturel et d'oxygène étant respectivement d'environ 100 Nm³/h et 200 Nm³/h. On constate un abaissement significatif des émissions de NOx avec une distribution dissymétrique de 5 tubes de gaz naturel selon la figure 2 par rapport à la distribution symétrique de révolution ("standard") de la figure 1.

D'autres configurations dissymétriques peuvent être imaginées. Par exemple, on peut, comme le montre la figure 4, qui représente une distribution angulaire de tubes 3 analogues à celle de la figure 1, donner des sections différentes aux tubes 3 et 3a, ici différenciés, véhiculant le gaz combustible. On peut aussi, avec un seul tube de combustible, le désaxer fortement dans l'enveloppe 2 véhiculant l'oxydant, comme représenté sur la figure 5.

## Revendications

1. Procédé de combustion d'un combustible et d'un oxydant dans lequel on injecte le combustible de manière dissymétrique à l'intérieur du flux d'oxydant, en ce que le flux d'oxydant comporte de 85% à 100% d'oxygène de manière a créer une zone de mélange en amont de la flamme qui comporte une partie où le rapport de l'oxydant au combustible est inférieur à la valeur stoechiométrique, créant ainsi localement une atmosphère réductrice.

2. Procédé selon la revendication 1, caractérisé en ce que l'oxydant comporte plus de 90% d'oxygène.

## Patentansprüche

1. Verfahren zum Verbrennen eines Brennstoffs und eines Oxidationsmittels, bei dem man den Brennstoff in unsymmetrischer Art und Weise in das Innere des Oxidationsmittelstroms einbläst, dadurch gekennzeichnet, daß der Oxidationsmittelstrom 85 bis 100% Sauerstoff enthält, so daß vor der Flamme eine Mischzone erzeugt wird, die einen Teil enthält, in dem das Verhältnis von Oxidationsmittel zu Brennstoff unter dem stöchiometrischen Wert liegt, wodurch lokal eine reduzierende Atmosphäre geschaffen wird.

2. Verfahren nach Anspruch 1, dadurch gekennzeichnet, daß das Oxidationsmittel mehr als 90% Sauerstoff enthält.

## Claims

1. Process for the combustion of a fuel and of an oxidizer, in which the fuel is injected asymmetrically into the stream of oxidizer, in that the stream of oxidizer comprises from 85% to 100% oxygen so as to create a mixing zone upstream of the flame which has a part where the oxidizer-to-fuel ratio is less than the stoichiometric value, thus locally creating a reducing atmosphere.

2. Process according to Claim 1, characterized in that the oxidizer comprises more than 90% oxygen.
